# EUROPEAN PATENT APPLICATION

(11) **EP 2 348 610 A1**
(43) Date of publication of application: **27.07.2011**
(21) Application number: 09824675.4
(22) Date of filing: 28.09.2009
(51) Int. Cl.: H02J 17/00

(54) **NON-CONTACT POWER TRANSMISSION DEVICE AND DESIGN METHOD THEREOF**

(30) Priority: 04.11.2008 JP 2008283562
(71) Applicant: Kabushiki Kaisha Toyota Jidoshokki, Kariya-shi, Aichi 448-8671 (JP); Toyota Jidosha Kabushiki Kaisha, Toyota-shi, Aichi 471-8571 (JP)
(72) Inventor: TAKADA, Kazuyoshi, Kariya-shi Aichi 448-8671 (JP); SUZUKI, Sadanori, Kariya-shi Aichi 448-8671 (JP); NAKATA, Kenichi, Kariya-shi Aichi 448-8671 (JP); SAKODA, Shimpei, Kariya-shi Aichi 448-8671 (JP); YAMAMOTO, Yukihiro, Kariya-shi Aichi 448-8671 (JP); ICHIKAWA, Shinji, Toyota-shi Aichi 471-8571 (JP); ISHIKAWA, Tetsuhiro, Toyota-shi Aichi 471-8571 (JP)
(74) Representative: TBK
(86) International application number: PCT/JP2009/066756
(87) International publication number: WO 2010/052975

(57) **Abstract**

A non-contact power transmission device is disclosed. The resonant system includes a primary coil connected to the AC power source, a primary resonance coil, a secondary resonance coil, and a secondary coil is connected to the load. When the relationship between an input impedance of the resonant system and a frequency of an AC voltage of the AC power source is shown in a graph, the frequency of the AC voltage of the AC power source is set between a first frequency at which the input impedance has a local maximum value, and a second frequency that is greater than the first frequency and at which the input impedance has a local minimum value.

## Description

### TECHNICAL FIELD

The present invention relate to a non-contact power transmission device and a design method thereof.

### BACKGROUND ART

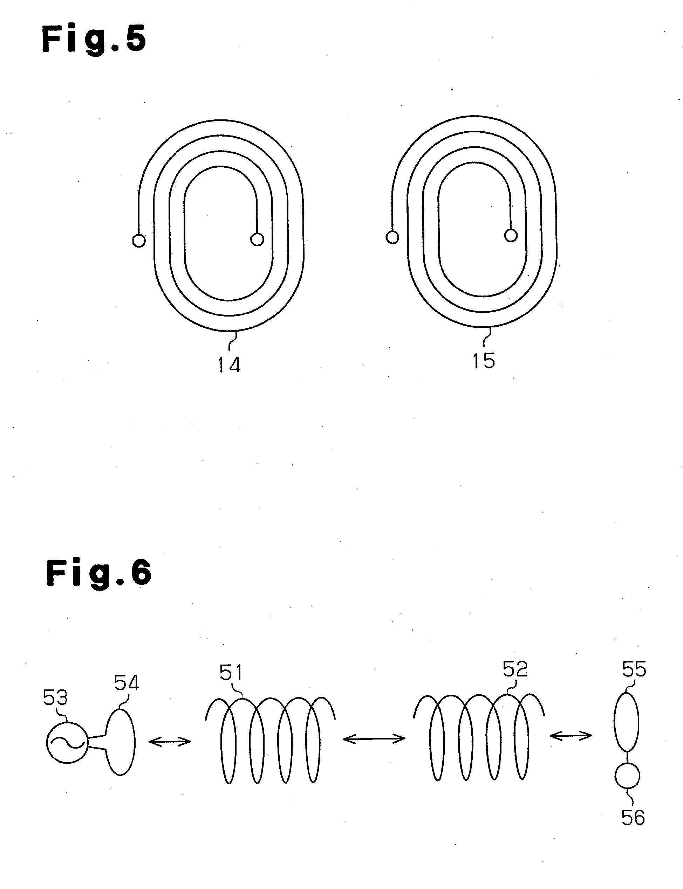

Fig. 6 shows a schematic view of a non-contact power transmission device that transmits power from a first copper wire coil 51 to a second copper wire coil 52, which is arranged spaced apart from the first copper wire coil 51, by resonance of electromagnetic fields. Such devices are disclosed in, for example, Non-Patent Document 1 and Patent Document 1. In Fig. 6, a magnetic field generated around a primary coil 54 connected to an AC power source 53, is intensified by magnetic field resonance of the first and second copper wire coils 51, 52. Through electromagnetic induction of the intensified magnetic field in the vicinity of the second copper wire coil 52 caused by such magnetic field resonance, power is generated in a secondary coil 55. The power of the secondary coil 55 is then supplied to a load 56. It has been observed that the load 56, which is a 60-watt electric lamp in this embodiment, can be lighted up when the first and second copper wire coils 51, 52 both having a radius of 30 cm are arranged apart from each other by 2 m.

### Prior Art Documents

Patent Document
Patent Document 1: International Publication Brochure WO2007/008646
Non-Patent Document
Non-Patent Document 1: NIKKEI ELECTRONICS Dec. 3, 2007, pages 117 to 128

### SUMMARY OF THE INVENTION

### Problems that the Invention is to Solve

However, Non-Patent Document 1 does not specify the relationship between the frequency of the output voltage of the AC power source 53 and the resonant frequency of the first copper wire coil 51 of a transmitting section, or an electric power transmitting section, and the second copper wire coil 52 of a receiving section, or an electric power receiving section. Such a relationship is necessary to design and manufacture a non-contact power transmission device. In particular, a method for determining the frequency of the output voltage of the AC power source 53 for transmitting power with high efficiency is not disclosed. Therefore, it is necessary to check the relationship between the frequency of the output voltage of the AC power source 53 and the power transmission efficiency in a wide range to determine the optimal frequency of the output voltage of the AC power source 53, which is time consuming.

Accordingly, it is an objective of the present invention to provide a non-contact power transmission device that is easily designed and manufactured, and a design method thereof.

### Means for Solving the Problems

To achieve the above objective, a first aspect of the present invention discloses a non-contact power transmission device including an AC power source, a resonant system, and a load. The resonant system includes a primary coil connected to the AC power source, a primary resonance coil, a secondary resonance coil, and a secondary coil connected to the load. When the relationship between an input impedance of the resonant system and a frequency of an AC voltage of the AC power source is plotted on a graph, the frequency of the AC voltage of the AC power source is set between a first frequency at which the input impedance has a local maximum value, and a second frequency that is greater than the first frequency and at which the input impedance has a local minimum value.

A second aspect of the present invention provides a non-contact power transmission device including an AC power source, a resonant system, and a load. The resonant system includes a primary coil connected to the AC power source, a primary resonance coil, a secondary resonance coil, and a secondary coil connected to the load. A frequency of an AC voltage of the AC power source is set within an input impedance decreasing range, which is a frequency range in which an input impedance of the resonant system is decreased as the frequency of the AC voltage is increased.

A third aspect of the present invention provides a method for designing a non-contact power transmission device including an AC power source, a resonant system, and a load. The resonant system includes a primary coil connected to the AC power source, a primary resonance coil, a secondary resonance coil, and a secondary coil connected to the load. When the relationship between an input impedance of the resonant system and a frequency of an AC voltage of the AC power source plotted on a graph, the frequency of the AC voltage of the AC power source is set between a first frequency at which the input impedance has a local maximum value, and a second frequency that is greater than the first frequency and at which the input impedance has a local minimum value.

A fourth aspect of the present invention provides a method for designing a non-contact power transmission device including an AC power source, a resonant system, and a load. The resonant system includes a primary coil connected to the AC power source, a primary resonance coil, a secondary resonance coil, and a secondary coil connected to the load. A frequency of an AC voltage of the AC power source is set within an input impedance decreasing range, which is a frequency range in which an input impedance of the resonant system is decreased as the frequency of the AC voltage is increased.

### BRIEF DESCRIPTION OF THE DRAWINGS

Fig. 1 is a schematic diagram illustrating a non-contact power transmission device according to one embodiment of the present invention;
Fig. 2 is a graph showing the relationship of the impedance of the primary coil, the input impedance of the resonant system, and the power transmission efficiency with the frequency of the AC voltage of the AC power source in a case where the number of turns of the primary coil is a single turn;
Fig. 3 is a graph showing the relationship of the impedance of the primary coil, the input impedance of the resonant system, and the power transmission efficiency with the frequency of the AC voltage of the AC power source in a case where the number of turns of the primary coil is two turns;
Fig. 4 is a graph showing the relationship of the impedance of the primary coil, the input impedance of the resonant system, and the power transmission efficiency with the frequency of the AC voltage of the AC power source in a case where the number of turns of the primary coil is four turns;
Fig. 5 is a schematic diagram illustrating a modified embodiment of the primary resonance coil and the secondary resonance coil forming the resonant system; and
Fig. 6 is a schematic diagram illustrating a conventional non-contact power transmission device.

### MODE FOR CARRYING OUT THE INVENTION

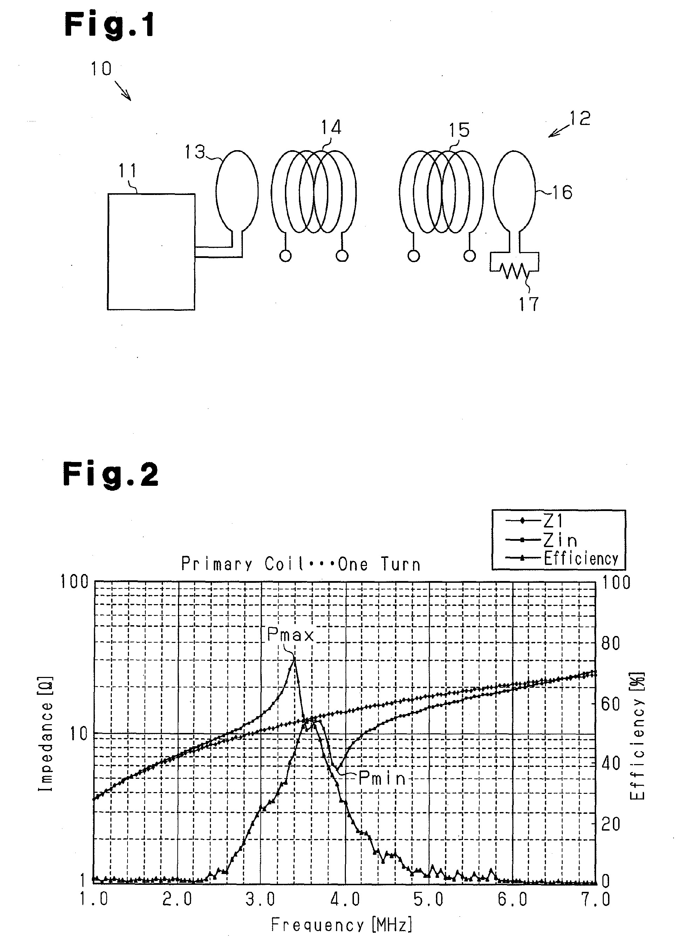

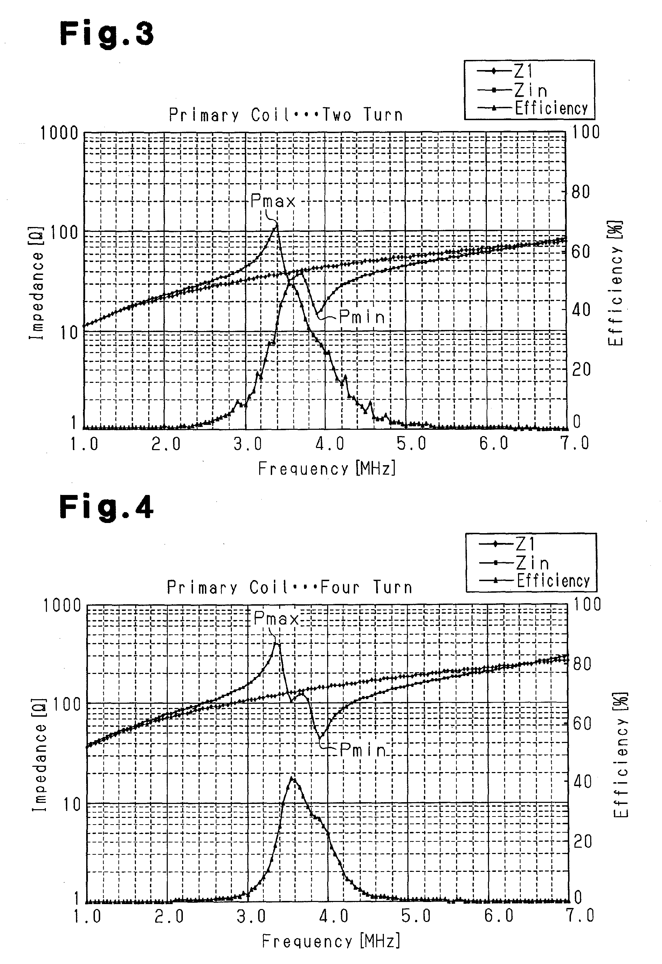

Figs. 1 to 4 illustrate a non-contact power transmission device 10 according to one embodiment of the present invention.

As shown in Fig. 1, the non-contact power transmission device 10 includes a resonant system 12, which transmits power supplied from an AC power source 11 to a load 17 without contact. The resonant system 12 includes a primary coil 13 connected to the AC power source 11, a primary resonance coil 14, a secondary resonance coil 15, and a secondary coil 16. The secondary coil 16 is connected to the load 17. The AC power source 11 supplies an AC voltage to the primary coil 13. The AC power source 11 may be one that converts a DC voltage input from a DC power source to an AC voltage and supplies the AC voltage to the primary coil 13.

The non-contact power transmission device 10 generates a magnetic field around the primary coil 13 by applying the AC voltage to the primary coil 13 from the AC power source 11. The non-contact power transmission device 10 intensifies the magnetic field generated around the primary coil 13 by magnetic field resonance between the primary resonance coil 14 and the secondary resonance coil 15. As a result, power is generated in the secondary coil 16 through electromagnetic induction of the intensified magnetic field in the vicinity of the secondary resonance coil 15. The generated power is supplied to the load 17.

The primary coil 13, the primary resonance coil 14, the secondary resonance coil 15, and the secondary coil 16 are each formed by an electric wire. The diameter and the number of turns of the coils 13, 14, 15, 16 are set in accordance with, for example, the level of power to be transmitted as required. In the present embodiment, the primary coil 13, the primary resonance coil 14, the secondary resonance coil 15, and the secondary coil 16 have the same diameter.

The frequency of the AC voltage output from the AC power source 11 can be changed freely. Thus, the frequency of the AC voltage applied to the resonant system 12 can be changed freely.

A method for designing the non-contact power transmission device 10 will now be described.

First, the specifications of the primary resonance coil 14 and the secondary resonance coil 15, which form the resonant system 12, are set. The specifications include, besides the material of the electric wire forming the primary resonance coil 14 and the secondary resonance coil 15, values required for manufacturing and mounting the resonance coils 14, 15 such as the size of the electric wire, the diameter and the number of turns of the coils, and the distance between the resonance coils 14, 15. Then, specifications for the primary coil 13 and the secondary coil 16 are set. The specifications include, besides the material of the electric wire forming the coils 13, 16, the size of the electric wire, and the diameter and the number of turns of the coils. A copper wire is generally used as the electric wire.

Subsequently, the primary coil 13, the primary resonance coil 14, the secondary resonance coil 15, and the secondary coil 16 are formed in accordance with the set specifications, which are then assembled into the resonant system 12. Thereafter, the load 17 is connected to the secondary coil 16. Then, the input impedance Zin of the resonant system 12 is measured while changing the frequency of the AC voltage of the AC power source 11 applied to the primary coil 13. The input impedance Zin of the resonant system 12 refers to the impedance of the entire resonant system 12 measured at both ends of the primary coil 13 regardless of whether the load 17 is connected to the secondary coil 16. Based on the measurement results, a graph is prepared with the vertical axis representing the input impedance Zin and the horizontal axis representing the frequency of the AC voltage of the AC power source 11. The frequency of the AC voltage of the AC power source 11 is set between a frequency at which the input impedance Zin of the resonant system 12 has a local maximum value, that is, a first frequency, and a frequency that is greater than the first frequency and at which the input impedance Zin has a local minimum value, that is, a second frequency. As shown in Fig. 2, when the graph is prepared with the vertical axis representing the input impedance Zin and the horizontal axis representing the frequency of the AC voltage of the AC power source 11, the input impedance Zin may have two local maximum points and two local minimum points depending on the resonant system 12. In this case, the frequency of the AC voltage of the AC power source 11 is set within the frequency range corresponding to the range between a local maximum point Pmax and a local minimum point Pmin in Fig. 2. The local maximum point Pmax is the local maximum point with the greater input impedance Zin among the two local maximum points, and the local minimum point Pmin is the local minimum point with the smaller input impedance Zin among the two local minimum points. Also, there might be several sets of the local maximum point and the local minimum point depending on the resonant system 12. For example, several local maximum points of the input impedance Zin might be the same as one another, and several local minimum points of the input impedance Zin might be the same as one another. For example, there might be some sets of the local maximum point Pmax and the local minimum point Pmin in Fig. 2. In such a case, the frequency of the AC voltage of the AC power source 11 is set within the frequency range corresponding to the set of the local maximum point Pmax and the local minimum point Pmin in the lowest frequency range among some frequency ranges.

In a state where the frequency of the AC voltage of the AC power source 11 is set as described above, the output impedance of the AC power source 11 and the input impedance Zin of the resonant system 12 are matched with each other. If the output impedance of the AC power source 11 and the input impedance Zin of the resonant system 12 cannot be matched, a matching circuit may be arranged between the AC power source 11 and the primary coil 13 so that the output impedance of the AC power source 11 matches with the input impedance Zin of the resonant system 12.

When matching the output impedance of the AC power source 11 with the input impedance of the resonant system 12, it is most preferable that the impedances match completely. However, the output impedance of the AC power source 11 and the input impedance of the resonant system 12 may match with each other within the range that achieves a desired performance, that is, a desired power transmission efficiency as the non-contact power transmission device. For example, the difference between the output impedance of the AC power source 11 and the input impedance of the resonant system 12 may be within the range of ±10%, or preferably ±5% with respect to the input impedance of the resonant system 12.

In the present embodiment, thin vinyl insulated low-voltage cables for automobiles, that is, AVS cables having the size or the cross-sectional area of 0.5 sq (square mm) are used as the electric wires for the coils 13, 14, 15, 16, which form the resonant system 12. Furthermore, the primary coil 13, the primary resonance coil 14, the secondary resonance coil 15, and the secondary coil 16 are formed in accordance with the following specifications.

Primary coil 13 and secondary coil 16: number of turns...2; diameter...150 mm; closely wound.

Resonance coils 14, 15: number of turns...45; diameter...150 mm; closely wound; both ends of coils are open.

Distance between primary resonance coil 14 and secondary resonance coil 15: 200 mm

The load 17, which is a resistor of 50 Ω in this embodiment, is connected to the secondary coil 16. A sine wave AC voltage of 10 Vpp (amplitude of 5 V) and having a frequency of 1 MHz to 7 MHz is supplied to the primary coil 13 from the AC power source 11 as an input voltage. Then, the impedance Z1 of the primary coil 13, the input impedance Zin of the resonant system 12, and the power transmission efficiency η were measured. To check the influence of the impedance Z1 of the primary coil 13 on the input impedance Zin of the resonant system 12 and the power transmission efficiency η, the number of turns of the primary coil 13 was changed to one turn and four turns without changing the specifications of the coils 14, 15, 16 except the primary coil 13, and the measurement was performed on the resonant system 12 with the same conditions. The measurement results are shown in the graphs of Figs. 2, 3, and 4. In Figs. 2 to 4, the horizontal axis represents the frequency of the AC voltage of the AC power source 11, and the vertical axis represents the input impedance Zin, the impedance Z1 of the primary coil 13, and the power transmission efficiency η. In Figs. 2 to 4, the power transmission efficiency η is simply indicated as efficiency η. The local maximum point of the input impedance Zin of the resonant system 12 is denoted as Pmax, and the local minimum point is denoted as Pmin. The power transmission efficiency η shows the ratio of the consumed power at the load 17 with respect to the input power to the primary coil 13. The following equation is used to calculate the power transmission efficiency η in terms of percentage (%).

Power transmission efficiency η = (consumed power at the load 17)/(input power to the primary coil 13) × 100 [%]

Figs. 2 to 4 suggest the following.
1. The impedance Z1 of the primary coil 13 is monotonically increased as the frequency of the AC voltage of the AC power source 11 increases from 1 MHz to 7 MHz regardless of the number of turns of the primary coil 13. As the frequency is decreased, the increasing rate of the impedance Z1 is increased.
2. When the frequency of the AC voltage of the AC power source 11 is constant, the impedance Z1 of the primary coil 13 is increased as the number of turns of the primary coil 13 is increased. Also, the increasing rate of the impedance Z1 of the primary coil 13 with respect to the frequency of the AC voltage of the AC power source 11 is greater when the number of turns of the primary coil 13 is increased by four times as compared to the case where the number of turns of the primary coil 13 is increased by two times.
3. The power transmission efficiency η has the maximum value at substantially the same frequency regardless of the number of turns of the primary coil 13. The frequency at which the power transmission efficiency η has the maximum value is defined as the resonant frequency of the resonant system 12.
4. When the frequency of the AC voltage of the AC power source 11 is in the range of 2 MHz or lower, or in the range of 6 MHz or higher, the input impedance Zin of the resonant system 12 changes to substantially match with the impedance of the primary coil 13. In the vicinity of the resonant frequency, parallel resonance and series resonance subsequently occurs, whereby the input impedance Zin changes to take the local maximum point Pmax and the local minimum point Pmin.
5. The frequency at which the input impedance Zin of the resonant system 12 takes the local maximum point Pmax and the local minimum point Pmin is constant regardless of the impedance Z1 of the primary coil 13.
6. The resonant frequency occurs between the first frequency and the second frequency. The first frequency is a frequency at which the input impedance Zin of the resonant system 12 takes the local maximum point Pmax, and the second frequency is a frequency greater than the first frequency. At the second frequency, the input impedance Zin of the resonant system 12 takes the local minimum point Pmin. When the frequency of the AC voltage of the AC power source 11 is set between the first frequency, which corresponds to the local maximum point Pmax, and the second frequency, which is greater than the first frequency and corresponds to the local minimum point Pmin, the power transmission efficiency η is increased.
7. The power transmission efficiency η is maximized when the frequency of the AC voltage of the AC power source 11 is set to a frequency between the first frequency, which corresponds to the local maximum point Pmax of the input impedance Zin of the resonant system 12, and the second frequency, which is greater than the first frequency and corresponds to the local minimum point Pmin of the input impedance Zin, and more over to a frequency at which the impedance Z1 of the primary coil 13 is equal to the input impedance Zin. Such a frequency is the resonant frequency.
8. In other words, the resonant frequency occurs in an input impedance decreasing range, which is a frequency range in which the input impedance Zin of the resonant system 12 is decreased as the frequency is increased. That is, the power transmission efficiency η is increased when the frequency of the AC voltage of the AC power source 11 is set within the range in which the input impedance Zin of the resonant system 12 is decreased as the frequency is increased.
9. The power transmission efficiency η is the highest at the frequency in the input impedance decreasing range, which is the frequency range in which the input impedance Zin of the resonant system 12 is decreased as the frequency is increased, and at which the impedance Z1 of the primary coil 13 is equal to the input impedance Zin. Such a frequency is the resonant frequency.

The present embodiment has the following advantages.
(1) The non-contact power transmission device 10 includes the AC power source 11, the resonant system 12, and the load 17. The resonant system 12 includes the primary coil 13, which is connected to the AC power source 11, the primary resonance coil 14, the secondary resonance coil 15, and the secondary coil 16, which is connected to the load 17. When the relationship between the input impedance Zin of the resonant system 12 and the frequency of the AC voltage of the AC power source 11 is shown in the graph, the frequency of the AC voltage of the AC power source 11 is set in the range between the first frequency, which is the frequency corresponding to the local maximum point Pmax of the input impedance Zin, and the second frequency, which is the frequency greater than the first frequency and corresponding to the local minimum point Pmin of the input impedance Zin. Thus, by only measuring the input impedance Zin of the resonant system 12, the range of the frequency of the AC voltage of the AC power source 11 that needs to be set to increase the power transmission efficiency η is limited between the first frequency, at which the input impedance Zin has a local maximum value, and the second frequency, which is greater than the first frequency and at which the input impedance Zin has a local minimum value. The non-contact power transmission device 10 is therefore easily designed.
(2) When the relationship between the input impedance Zin of the resonant system 12 and the frequency of the AC voltage of the AC power source 11 is shown in the graph, the frequency of the AC voltage of the AC power source 11 is set to the frequency between the first frequency, at which the input impedance Zin has a local maximum value, and the second frequency, which is greater than the first frequency and at which the input impedance Zin has a local minimum value, and moreover to the frequency at which the impedance Z1 of the primary coil 13 is equal to the input impedance Zin. Thus, the non-contact power transmission device 10 is easily designed. When the AC voltage having a frequency set to such a value is applied to the primary coil, the power transmission efficiency η of the resonant system 12 is maximized.
(3) The primary coil 13, the primary resonance coil 14, the secondary resonance coil 15, and the secondary coil 16 all have the same diameter. Thus, by winding the primary coil 13 and the primary resonance coil 14 around a single cylinder, the coils 13, 14 of the transmitting section, that is, the electric power transmitting section are easily manufactured. Similarly, by winding the secondary resonance coil 15 and the secondary coil 16 around a single cylinder, the coils 15, 16 of the receiving section, that is, the electric power receiving section are easily manufactured. Also, by equalizing the design parameters such as the number of turns of the primary resonance coil 14 and the secondary resonance coil 15, the resonant frequency of the coils 14, 15 is easily equalized.
(4) The non-contact power transmission device 10 includes the AC power source 11, the resonant system 12, and the load 17. The resonant system 12 includes the primary coil 13, which is connected to the AC power source 11, the primary resonance coil 14, the secondary resonance coil 15, and the secondary coil 16, which is connected to the load 17. The frequency of the AC voltage of the AC power source 11 is set within the input impedance decreasing range, which is the frequency range in which the input impedance Zin of the resonant system 12 is decreased as the frequency of the AC voltage of the AC power source 11 is increased. Thus, by only measuring the input impedance Zin of the resonant system 12, the range of the frequency of the AC voltage of the AC power source 11 that needs to be set to increase the power transmission efficiency η is limited to the input impedance decreasing range, which is the frequency range in which the input impedance Zin of the resonant system 12 is decreased as the frequency is increased. The non-contact power transmission device 10 is therefore easily designed.
(5) The frequency of the AC voltage of the AC power source 11 is set to a frequency within the input impedance decreasing range, which is the frequency range in which the input impedance Zin of the resonant system 12 is decreased as the frequency of the AC voltage of the AC power source 11 is increased, and at which the input impedance Zin of the resonant system 12 has the same value as the impedance Z1 of the primary coil 13. Thus, the non-contact power transmission device 10 is easily designed. In particular, when the AC voltage having a frequency set to such a value is applied to the primary coil 13, the power transmission efficiency η of the resonant system 12 is maximized.
(6) The impedance Z1 of the primary coil 13 is set such that the output impedance of the AC power source 11 matches with the input impedance Zin of the resonant system 12 at the set frequency. Thus, power is efficiently supplied to the non-contact power transmission device 10 from the AC power source 11. Also, when matching the output impedance of the AC power source 11 with the input impedance Zin of the resonant system 12, only measuring the impedance Z1 of the primary coil 13 is enough, instead of measuring the input impedance Zin of the resonant system 12. Thus, the impedances Zin, Z1 are easily matched.
(7) The design method for the non-contact power transmission device 10 includes setting the frequency of the AC voltage of the AC power source 11 between the first frequency, at which the input impedance Zin has a local maximum value, and the second frequency, which is greater than the first frequency and at which the input impedance Zin has a local minimum value, when the relationship between the input impedance Zin of the resonant system 12 and the frequency of the AC voltage of the AC power source 11 is shown in the graph. Thus, the range of the frequency of the AC voltage of the AC power source 11 that needs to be set to increase the power transmission efficiency η is limited to the range between first frequency, at which the input impedance Zin of the resonant system 12 has a local maximum value, and the second frequency, which is greater than the first frequency and at which the input impedance Zin has a local minimum value, by only measuring the input impedance Zin of the resonant system 12. Thus, the non-contact power transmission device 10 is easily designed.

The present invention is not limited to the illustrated embodiment, but may be modified as follows.

When forming the coils 13, 14, 15, 16 by winding electric wires, the shape of the coils 13, 14, 15, 16 does not need to be cylindrical. For example, the shape of the coils 13, 14, 15, 16 may be a polygonal tubular shape such as a triangular tubular shape, a square tubular shape, and a hexagonal tubular shape, or a simple tubular shape such as an oval tubular. Alternatively, the shape of the coils 13, 14, 15, 16 may be a tubular shape having an asymmetrical cross-section.

The primary resonance coil 14 and the secondary resonance coil 15 are not limited to the coil formed by winding the electric wire into a cylindrical shape, but may be a coil formed by winding the electric wire on a plane as shown in Fig. 5.

The coils 13, 14, 15, 16 may have a structure in which the electric wire is closely wound so that the adjacent wires contact each other. Alternatively, the coils 13, 14, 15, 16 may have a structure in which the electric wire is wound with a space between wound sections such that the wound sections do not contact each other.

The primary coil 13, the primary resonance coil 14, the secondary resonance coil 15, and the secondary coil 16 do not need to have the same diameter. For example, the primary resonance coil 14 and the secondary resonance coil 15 may have the same diameter, and the primary coil 13 and the secondary coil 16 may have different diameters from each other. Alternatively, the primary coil 13 and the secondary coil 16 may have a diameter different from that of the resonance coils 14, 15.

The electric wire forming the coils 13, 14, 15, 16 does not need to be a vinyl insulated wire, but may be an enamel wire. Alternatively, after winding a bare wire, the bare wire may be resin molded.

The method for designing the non-contact power transmission device 10 is not limited to a method in which, after setting the specifications for the primary resonance coil 14 and the secondary resonance coil 15, which form the resonant system 12, the specifications of the AC power source 11 is set, and the impedance Z1 of the primary coil 13 is set such that the output impedance of the AC power source 11 matches with the input impedance Zin of the resonant system 12. For example, the specifications of the AC power source 11 may be set first, and the specifications of the primary resonance coil 14 and the secondary resonance coil 15, which form the resonant system 12, and the impedance Z1 of the primary coil 13 may be set to match with the set specifications of the AC power source 11. Setting the specifications of the AC power source 11 prior to the specifications of the resonant system 12 means that, when setting the specifications of the resonant system 12, the material of the electric wire forming the primary resonance coil 14 and the secondary resonance coil 15 and values such as the size of the electric wire, the diameter of the coils, the number of turns, and the distance between the resonance coils 14, 15 are set in a state where the resonant frequency has already been determined.

### [Description of the Reference Numerals]

Pmax...local maximum point, Pmin... local minimum point, 10... non-contact power transmission device, 11...AC power source, 12... resonant system, 13... primary coil, 14... primary resonance coil, 15... secondary resonance coil, 16... secondary coil, 17...load.

## Claims

1. A non-contact power transmission device comprising an AC power source, a resonant system, and a load,
the resonant system including a primary coil connected to the AC power source, a primary resonance coil, a secondary resonance coil, and a secondary coil connected to the load,
the non-contact power transmission device being **characterized in that**, when the relationship between an input impedance of the resonant system and a frequency of an AC voltage of the AC power source is plotted on a graph, the frequency of the AC voltage of the AC power source is set between a first frequency, at which the input impedance has a local maximum value, and a second frequency, which is greater than the first frequency and at which the input impedance has a local minimum value.

2. The non-contact power transmission device according to claim 1, wherein the frequency of the AC voltage of the AC power source is set to a frequency between the first frequency and the second frequency, and at which the input impedance and an impedance of the primary coil are equal to each other.

3. The non-contact power transmission device according to claim 1, wherein the primary coil, the primary resonance coil, the secondary resonance coil, and the secondary coil have the same diameter.

4. A non-contact power transmission device comprising an AC power source, a resonant system, and a load,
the resonant system comprising a primary coil connected to the AC power source, a primary resonance coil, a secondary resonance coil, and a secondary coil connected to the load,
the non-contact power transmission device being **characterized in that** a frequency of an AC voltage of the AC power source is set within an input impedance decreasing range, which is a frequency range in which an input impedance of the resonant system is decreased as the frequency of the AC voltage is increased.

5. The non-contact power transmission device according to claim 4, wherein the frequency of the AC voltage of the AC power source is set to a frequency that is in the input impedance decreasing range and at which the input impedance and an impedance of the primary coil are equal to each other.

6. The non-contact power transmission device according to claim 4, wherein the primary coil, the primary resonance coil, the secondary resonance coil, and the secondary coil have the same diameter.

7. A method for designing a non-contact power transmission device comprising an AC power source, a resonant system, and a load,
the resonant system including a primary coil connected to the AC power source, a primary resonance coil, a secondary resonance coil, and a secondary coil connected to the load,
the design method being **characterized in that**, when the relationship between an input impedance of the resonant system and a frequency of an AC voltage of the AC power source is plotted on a graph, the frequency of the AC voltage of the AC power source is set between a first frequency, at which the input impedance has a local maximum value, and a second frequency, which is greater than the first frequency and at which the input impedance has a local minimum value.

8. The method according to claim 7, wherein the frequency of the AC voltage of the AC power source is set to a frequency between the first frequency and the second frequency, and at which the input impedance and an impedance of the primary coil are equal to each other.

9. A method for designing a non-contact power transmission device comprising an AC power source, a resonant system, and a load,
the resonant system including a primary coil connected to the AC power source, a primary resonance coil, a secondary resonance coil, and a secondary coil connected to the load,
the design method being **characterized in that** a frequency of an AC voltage of the AC power source is set within an input impedance decreasing range, which is a frequency range in which an input impedance of the resonant system is decreased as the frequency of the AC voltage is increased.

10. The method according to claim 9, wherein the frequency of the AC voltage of the AC power source is set to a frequency that is in the input impedance decreasing range and at which the input impedance and an impedance of the primary coil are equal to each other.
